# EUROPEAN PATENT APPLICATION

(11) **EP 3 936 212 A1**
(43) Date of publication of application: **12.01.2022**
(21) Application number: 20184727.4
(22) Date of filing: 08.07.2020
(51) Int. Cl.: B01D 46/00, B01D 46/52

(54) **FILTER DEVICE AND SYSTEMS FOR CONTROLLING AIR-SUSPENDED PARTICLE DISTRIBUTION AND CONCENTRATION**

(71) Applicant: NanoCleanAir GmbH, 5443 Niederrohrdorf (CH)
(72) Inventor: Mayer, Andreas, 5443 Niederrohrdorf (CH); Czerwinski, Jan, 2562 Port (CH); Burtscher, Heinz, 8964 Rudolfstetten (CH); Kasper, Markus, 8964 Rudolfstetten (CH); Mayer, Rainer, 5420 Ehrendingen (CH); Mayer, Jörg, 5702 Niederlenz (CH)
(74) Representative: Kasche & Partner

(57) **Abstract**

The present invention is directed to a filter device for filtering ultrafine particles from a gas comprising a first filter medium for absorbing polar liquids but not ultrafine particles; in fluid communication with a second filter medium for absorbing ultrafine particles; and a gas outlet, wherein the first filter medium is configured to allow vaporization of the absorbed polar liquids; the device is configured to guide the gas from the first to the second filter medium and through the second filter medium; and the second filter medium forms the gas outlet. The present invention also encompasses associated uses and methods for filtering ultrafine particles including systems for positioning and integrating the inventive filter devices.

## Description

The present invention is directed to a filter device for filtering ultrafine particles from a gas comprising a first filter medium for absorbing polar liquids but not ultrafine particles; in fluid communication with a second filter medium for absorbing ultrafine particles; and a gas outlet, wherein the first filter medium is configured to allow vaporization of the absorbed polar liquids; the device is configured to guide the gas from the first to the second filter medium and through the second filter medium; and the second filter medium forms the gas outlet. The present invention also encompasses associated uses and methods for filtering ultrafine particles including systems for positioning and integrating the inventive filter devices.

### Background

Ultrafine particles, also called nanoparticles, significantly add to air pollution and depending on their nature constitute a health hazard for humans and animals. The particles can be linked to a range of diseases, such as heart attacks, cancer, lung disease, and immune system diseases partly because ultrafine particles readily pass into body cells and are distributed systemically. Apart from toxic effects, infections may also be caused by ultrafine particles such as viruses. Many ultrafine particles, especially viruses, have in common that they remain in a floating state in ambient air with a remarkably slow rate of decent (approx. 10 cm/h for viruses) and remain infective while floating in ambient air over a period of about 3 to 5 hours. The health risk for humans and animals being exposed to ultrafine particles in ambient air is increased by prolonged exposure times while standard means of protection such as face masks or distancing do not sufficiently reduce the health risk due to the small nature of the particles and the long floating time as well as extensive distribution of the particles in the air by diffusion, turbulence and/or active ventilation.

Conventional ventilation systems such as air conditioning systems in closed spaces may even increase the concentration of ultrafine particles and, thus, contribute to the health risk. Also, most ventilation and/or air conditioning systems introduce air from the ceiling downwards which (also in combination with air recirculation) leads to the distribution of particles, e.g. viruses, around the people in the closed space.

The effective filtering of ultrafine particles in closed spaces faces several challenges. The filters required for ultrafine particles can only cope with a slow air flow and the turn-around of large volumes of air for effective reduction of the particle concentration is limited by the air speed through the filter. To increase the turn-around, the filter surface area would have to be increased which is not always feasible or economical. This problem is exacerbated by contamination of the filters. This contamination can be the result of, e.g., liquids which condense on the filter material and thereby block the filter, i.e. significantly and adversely increase the flow resistance of the filter. Even worse, condensed water in the filter can lead to bacterial or fungal growth and often results in washing out of filtered ultrafine particles which are then re-administered to the previously filtered air. Additionally, larger particles such as dust, pollen, coarse aerosols and bacteria, e.g. having mean diameters of more than 500 nm can block ultrafine particle filters. If larger particles cover the ultrafine particle filter's surface, this coverage also significantly reduces any functional coatings on the filter, e.g. any anti-microbial or anti-viral coatings.

It is the objective of the present invention to provide improved filter means for filtering ultrafine particles from a gas, as well as to provide systems to reduce the concentration of ultrafine particles in a gas, in particular in ambient air.

In a first aspect, the present invention is directed to a filter device for filtering ultrafine particles from a gas, optionally a gas comprising polar liquids, comprising:
(i) a first filter medium for absorbing polar liquids, optionally water, and optionally particles of more than about 1 µm or 500 nm diameter; in fluid communication with
(ii) a second filter medium for absorbing ultrafine particles; and
(iii) a gas outlet;
wherein
(a) the first filter medium is configured to allow vaporization of the absorbed polar liquids;
(b) the device is configured to guide the gas from the first to the second filter medium and through the second filter medium; and
(c) the second filter medium forms the gas outlet.

Gas, especially ambient air, often comprises liquid water in the form of, e.g., droplets. Conventional filter devices, in particular for ultrafine particles, may be hampered in their efficacy by these liquid water droplets which are absorbed by the filter medium of the devices. When water or any other polar liquid is absorbed by filters for ultrafine particles, the filters block - or even worse - release the previously filtered particles. This release is mediated by the polar liquid which engulfs or binds to the particles and carries them through the filter medium. In addition to polar liquids in the form of droplets, these liquids may be present in the gas, e.g. ambient air, in their gas form and condense on the filter medium when being moved through a filter device which also results in the aforementioned problems. Additionally, accumulated or condensed water in ultrafine particle filter media may form a basis for microbial or fungal growth which represents a nuisance (e.g. odor) or health hazard. Additionally, larger particles such as dust, pollen, coarse aerosols and bacteria, e.g. having mean diameters of more than 1 µm or 500 nm can be, optionally, filtered by the first filter medium. Alternatively, the filtering of these particles can be achieved by a further (e.g. third) filter medium as set forth below. These particles of more than 1 µm or 500 nm can block the second filter medium and significantly and adversely increase the flow resistance of the second filter medium. If larger particles cover the second filter medium's surface, this coverage also significantly reduces any functional coatings on the filter, e.g. any anti-microbial or anti-viral coatings.

The device of the present invention comprises a first filter medium for absorbing polar liquids and optionally particles of more than about 1 µm or 500 nm before these liquids and optionally the particles come into contact with the second filter medium for ultrafine particles. The first filter medium is of a composition which allows a gas, e.g. ambient air, and ultrafine particles (e.g. particles of less than about 1 µm or 500 nm diameter) to pass but retains polar liquids and optionally particles of more than about 1 µm or 500 nm on the surface or within the structure of the first filter medium. For example, the first filter medium is of a composition which is sufficiently porous for enlarging the surface area in favor of vaporization of the retained polar liquid, but sufficiently dense to avoid passage of the polar liquid and optionally particles of more than about 500 nm towards the second filter medium. Due to the stream of gas through the first filter medium and/or the composition of the first filter medium, the retained polar liquids vaporize and pass the second filter medium in their gas form. Vaporization may be enhanced by heating the passing gas and/or the first filter medium or by adjusting, e.g. decreasing, the air pressure on the outlet side of the first filter medium in order to reduce the boiling point of the polar liquid. For example, the first filter medium can be made of a material with water-absorbing properties due to a hydrophilic surface, e.g. a cellulose material or a material with hydrogel fibers, wherein water is first adsorbed, then absorbed and only released in gaseous form by diffusion.

The aforementioned polar liquids may also comprise particles, such as, e.g., viruses, and they may be suspended in a gas and enter the device of the present invention. The liquid-coated, in particular water-coated, viruses can emerge, e.g. from humans or animals who/which sequester virus-comprising droplets by coughing or sneezing but also by normal exhalation. The latter especially generates smaller aerosol droplets in the range of 5 µm that quickly, e.g. in milliseconds, or between 0.01 and 0.1 s, transform to a dry aerosol while coughing or sneezing generates larger droplets (0.1-1 mm) that are less likely to transform into an aerosol. If the water is not removed from the particles or viruses before they reach a filter for filtering ultrafine particles, the filter may be blocked and/or the water-coated virus may pass the filter as described in general above for polar liquids.

The first filter medium of the device of the present invention removes the liquid coating, in particular the water coating, from particles, e.g. viruses, and thus enables the filtration and retention of the substantially liquid-free ultrafine particles in the second filter medium.

Ultrafine particles, as used herein, are particles of a mean diameter size of 10 to 500 nm, in particular 30 to 200 nm. Examples for ultrafine particles include combustion generated particles like soot or metal oxides, abrasion and wear particles from breaks and tires, viruses and retroviruses, optionally corona viruses (70-150 nm), SARS, Influenca viruses, MERS, Measels, Ebola.

The first filter medium of the present device is in fluid communication with the second filter medium. This means that the device is configured such that the gas passes through the first filter medium and is then directed, guided or forced to pass through the second filter medium essentially without bypassing the second filter medium and/or without exiting the device before passing through the second filter medium.

The gas from which the ultrafine particles are filtered can be any gas including ambient air, recirculated air, pressurized air, or medicinal oxygen.

A polar liquid, as used herein, is defined as commonly understood in the art and includes polar liquids such as water.

In an embodiment, the first and/or second filter medium form at least part of a first and/or second filter housing.

For example, the first filter housing may have a gas inlet and at least part or all of the housing's walls can be made from the first filter medium. The gas to be filtered can enter the first filter housing via a gas inlet and pass through the first filter medium in direction of the second filter medium. Alternatively, the first filter housing's walls may be gas-impermeable and may be at least partially or fully covered on the inside of the filter housing with the first filter medium. In this case, for example, the first filter housing comprises a gas outlet in addition to the gas inlet in order for the gas to be filtered to flow in direction of the second filter medium.

The second filter housing may, for example, be entirely or partially made from the second filter medium. For example, the device can be constructed such that all the gas to be filtered which enters the device of the invention passes through the second filter medium before exiting the device. Alternatively, the second filter housing may have gas-impermeable walls and a gas outlet which encompasses the second filter medium, which corresponds, e.g., to an embodiment in which the second filter partially forms the second filter housing.

In a further embodiment, the first filter housing is configured to allow and/or create a rotational spin or turbulent flow of the gas for contacting the first filter medium.

For example, the rotational spin or turbulent flow of the gas results in the polar liquids to be deposited on the first filter medium which can form or be positioned on the first filter housing. The rotational spin or turbulent flow may be generated by the geometry of the first filter housing or by means comprised therein, e.g. by flow-directing means, e.g. vanes, or it may be generated by a suitable gas mover, e.g. a blower or fan, which introduces a rotational spin or turbulent flow of the gas entering the first filter housing. For example, a rotational spin of the gas in the first filter housing is suitable for precipitating polar liquids and optionally particles of more than about 1 µm or 500 nm in the gas, e.g. based on the effect of inertia and their larger weight compared to the gas, on the first filter medium which can form or be positioned on the second filter housing. A turbulent gas flow may lead to an increased contact between the gas and the first filter medium to increase the probability of contact of the polar liquid with the first filter medium, where the polar liquid is absorbed.

The device described herein may comprise more than one first filter media, and/or more than one first filter housings which are positioned separate from one another. For example, one first filter medium and/or housing "A" may be specifically designed to retain polar liquids, e.g. due a filter medium with water-absorbing properties mediated by a hydrophilic surface, e.g. a cellulose material or a material with hydrogel fibers, wherein water is first adsorbed, then absorbed and only released in gaseous form by diffusion. A second first filter medium and/or filter housing "B" may be used in the device downstream of the medium and/or housing "A" which can be specifically designed to retain solid particles larger than one 1 µm or 500 nm (e.g. dust, bacteria, spore or pollen).

For example, the first filter housing may comprise any means, e.g. guiding means, vanes, or channels, which force the gas flow to contact the first filter medium.

In another embodiment, the first filter housing comprises a gas outlet configured to straighten the gas flow. The straightening of the gas flow may be achieved by an additional, third filter medium, e.g. with a honeycomb shape, or by the first filter medium forming the gas outlet and having a structure that is suitable for straightening the air flow.

In a further embodiment, the gas outlet of the first filter housing comprises a third filter medium. For example, the third filter medium for straightening the gas flow may also filter larger particles larger than one 1 µm or 500 nm (e.g. for dust, bacteria, spore or pollen filtration) in diameter before the gas reaches the second filter medium.

The relative allocation of the first and second filter housing may be any allocation that allows a gas flow from the first to the second filter housing without any substantial gas leakage between the first and second filter housing.

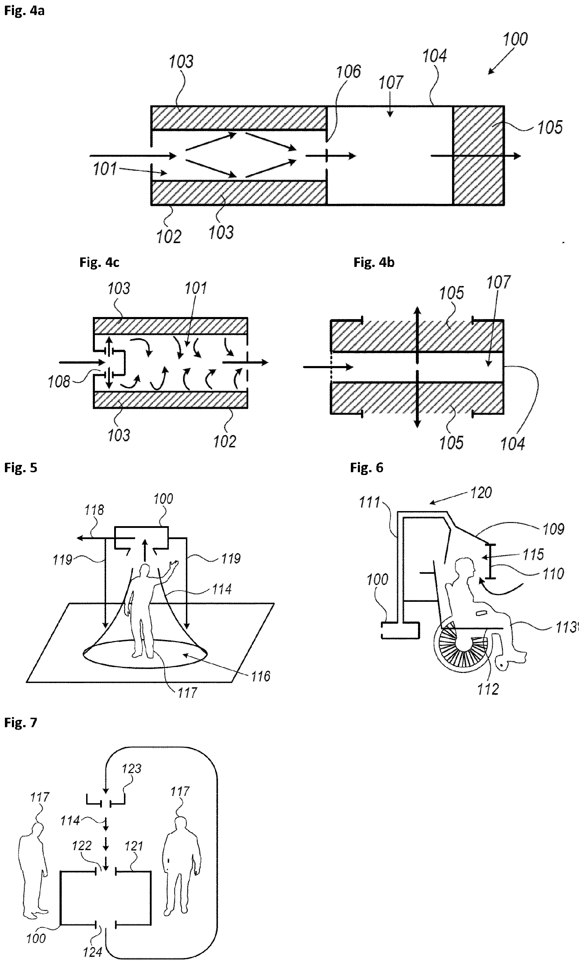

In another embodiment, the first and the second filter housings are arranged in sequence, for example as shown in Fig. 4.

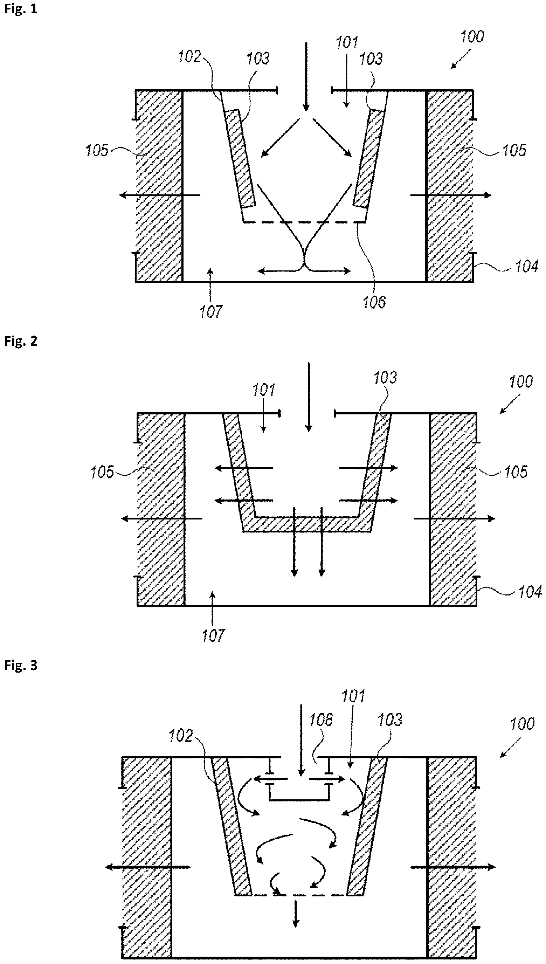

In a further embodiment, the first filter housing is positioned within the second filter housing, for example as shown in Figs. 1 to 3.

For example, and for all devices described herein, the first and second filter housing may be detachable from each other. For example, the second filter housing can be exchanged and a new second filter housing can be attached to the first filter housing, e.g. for maintenance purposes.

In another embodiment, the device described herein further comprises a device for moving gas, optionally a radial blower or a fan, configured to move the gas through the device. For example, a radial blower can be used, e.g. with steep pressure characteristics, e.g. a radial blower that provides a pressure level of up to about 25 mbar. For example, the device for moving gas can be positioned before the first filter medium and can push gas onto the first filter medium and/or into the first filter housing. The device for moving gas may also be comprised within the first filter housing, and, e.g., create a rotational spin within the first filter housing. For example, the device for moving gas may be comprised within the first filter housing and its shape may constitute flow-directing means which introduce and/or increase a rotational spin or turbulent flow of the gas within the first filter housing.

In an embodiment, the first filter medium forms an impaction filter. For example, the collision of polar liquids and optionally particles of more than about 1 µm or 500 nm with the material of the first filter medium results in the liquids and particles being retained therein or thereon.

For example, the first filter medium of any embodiment described herein, does not filter and/or retain particles smaller than about 500 nm at a gas velocity in the filter of about > 0.5-1 m/s but retains microparticles > 1 µm, optionally > 500 nm, and/or absorbs polar liquids and/or polar liquids comprising ultrafine particles and/or particles, e.g. with a size of > 500 nm or > 1 µm.

In a further embodiment, the first filter medium has a medium pore size of more than about 30 µm, optionally a pore size in the range of 30 to 100 µm, 50 to 100 µm or 30 to 200 µm, is made from fiber-based constructs like fleeces, papers, configured textiles, optionally packed knitted metal fibers, or foams of any material selected from organic, optionally cellulose, hydrophobic fibers, optionally polyolefines, hydrophilic fibers, optionally polyesthers and polyurethanes, and inorganic fibers, optionally steel, aluminum, copper, silver, glass, mullite fibers, sintered metals, optionally steel and aluminum, and ceramic powders, optionally glass and mullite powders, and open porous polymers, optionally polyurethane, polyolefin and polystyrene foams.

The first filter medium of any embodiment herein may have a filter medium thickness of, e.g. about 0.2 to 20 mm. The filter medium thickness is the thickness of the material, i.e. the material strength, the filter is made from. The first filter medium may have a depth of, e.g. about 10 to 300 mm. The depth of the filter medium is the total distance from one side of the filter medium to the opposing side in direction of gas flow.

For example, the second filter medium can be coated with a hydrophobic material on the gas entry side of the medium in order to substantially avoid polar liquid condensation build up. Exemplary hydrophobic coatings are selected from the group consisting of grafted molecules exposing hydrophobic end groups such as, e.g. HF , PVD or CVD deposited hydrophobic Teflon like substances and/or coatings described in Coclite 2013 - Super-Hydrophobic and Oloephobic Crystalline Coatings by Initiated Chemical Vapor Deposition, Physics Procedia 46(2013)56-61, or Darband 2020 Science and Engineering of Superhydrophobic Surfaces: Review of Corrosion Resistance, Chemical and Mechanical Stability. Optionally, the coating does not penetrate more than about 15% to 25 % of the thickness of the second filter medium.

For example, and in addition or as an alternative to the hydrophobic material, the second filter medium can be coated with a hydrophilic material on the gas exit side of the medium in order to substantially avoid the formation of droplets of polar liquids, e.g. in case some liquid condensation would have penetrated the second filter medium.

Both the hydrophobic and hydrophilic material can be coated on the filter medium either during filtering operation, e.g. by spraying of the hydrophobic substance or during reverse flow from the distal end of the device to the filter medium by hydrophilicity inducing substances.

The second filter housing for any embodiment disclosed herein may also comprise the second filter medium as a honeycomb cell structure with alternately closed cells at the entry and the outlet, e.g. the second filter housing can be substantially made from and filled with the second filter medium, wherein the gas passes through the honeycomb walls of the second filter medium as described by the inventers in the SAE-Paper SAE 2009-01-1087.

The second filter medium may be any filter medium known in the art that is suitable for filtering ultrafine particles as described in Handbuch Verbrennungsmotor by Basshuysen /Springer Vieweg 2017 Chapter 21.6.3.

In another embodiment, the second filter medium forms a diffusion filter.

In another embodiment, the second filter medium has a medium pore size in the range of 10 to 20 µm, optionally 5 to 20 µm, is made from ceramic, metallic, plastic or cellulose materials in form of fiber structures or foams and/or has a filter medium thickness in the range of 0.2 to 5 mm, optionally 0.2 to 1 mm, and/or a filter depth in direction of gas flow of 3 to 10 mm for a pleaded filter medium or 10 to 50 cm for a cell-shaped, e.g honeycomb, filter medium.

For both, the first and second filter medium, the filter medium thickness is the thickness of the material, i.e. the material strength, the filter is made from. For example, in a cell-type filter, e.g. a honeycomb filter, the filter medium thickness relates to the thickness of the filter material in between the cells. The depth of the filter medium is the total distance from one side of the filter medium to the opposing side in direction of gas flow. For example, the filter depth of a cell-type filter corresponds to the length of the cells of the filter from the one side of the filter medium to the opposing side in direction of gas flow.

The second filter medium can be made from papier mâché, e.g. with cellulose fibers of less than about 1 mm in length. The second filter medium may be suitable for disposal and waste incineration. For example, the second filter medium may feature pores that allow particles, e.g. dust particles, of more than about 1 but smaller than 8 µm to penetrate the second filter medium.

For example, the first and/or second filter medium may be a pleated filter or a cell-type, e.g. honeycomb filter.

For example, the first and/or second filter medium can be exchangeable independent of the first and/or second filter housing.

In a further embodiment, the gas velocity through the first filter housing and/or first filter medium is in the range of 0.5 to 5 m/s, optionally 0.5 to 2 or 0.5 to 1 m/s. This gas velocity generally leads to a collision of polar liquids and optionally particles of more than about 1 µm or 500 nm with the material of the first filter medium and results in the liquids and particles being retained therein or thereon.

The term gas velocity as used herein for the first and second filter medium refers to the velocity of the gas perpendicular to the surface area of the first or second filter medium, i.e. the filter material, through which the gas passes.

For example, the pressure in the first filter housing may be in the range of 1 to 5 mbar and/or the pressure in the second filter housing may be in the range of 5 to 15 mbar. The pressure may be adjusted by the gas moving device (e.g. dimension of the gas moving device, fan or blower speed etc.), the density or porosity of the first and/or second filter medium, the space velocity at the first and/or second filter medium, the shape of the first and/or second filter housing, e.g. including the size of the area through which the gas passes from the first to the second filter housing and/or from the second filter housing to the outside of the device, or by a combination thereof. The term space velocity, as used herein, is defined as the gas volume divided by the filter volume with 1/s as unit.

For example, the gas velocity passing through the first filter medium and/or the first filter housing is higher than the gas velocity passing through the second filter medium and/or housing. The gas mass flow rate, however, is optionally constant through the filter device. For example, the difference in gas velocity between the first and second filter medium and/or housing can be achieved by rendering the volume of the first filter housing smaller than the volume of the second filter housing, e.g. to ensure a gas velocity through the second filter medium which is suitable for filtering ultrafine particles, e.g. as defined herein. Alternatively, the gas velocity may be adjusted to be higher in the first filter medium and/or housing compared to the second filter medium and/or housing (e.g. while keeping the gas mass flow rate essentially constant through the device) by reducing the gas velocity in the second filter medium/housing by increasing the surface area of channels in the second filter medium, e.g. by increasing the length of the passages through which the gas is forced from entry to exit of the second filter medium. The aforementioned reduction of gas velocity is particularly suitable for filter devices in which the first filter and second filter housing are of comparable or essentially similar volume, e.g. if the first and second filter medium are installed in a cylindrical housing which forms both, the first and second filter housing.

In another embodiment, the gas velocity through the second filter medium is in the range of 1 to 100, optionally 1 to 20, 1 to 10 or 1 to 3 cm/s. This gas velocity generally allows the interaction of the ultrafine particles with the surface of the second filter medium based on, e.g. can der Waals forces, and results in the adsorption of the ultrafine particles on the surface of the second filter medium.

For example, the ratio between the gas velocity through the first filter medium and the second filter medium can be about or greater than about 10:1.

For example, the device described herein may comprise heating means for heating the first filter housing and/or first filter medium for supporting evaporation of liquids. For example, heating means can be electrically conducting materials, e.g. metal materials, or hot air heated outside the device.

In another embodiment, at least the surface of the first and/or second filter medium is antimicrobial, antifungal and/or antiviral, optionally is silver or silver-coated.

For example, the first filter medium can be coated with antibacterial and/or antifungal coatings, e.g. silver- and/or copper-comprising coatings.

For example, disinfection of the first filter medium can also be achieved by UV-C irradiation (e.g. with a UV light within the device).

For example, the second filter medium can be coated with antiviral coatings such as, e.g. silver- and/or copper-comprising coatings. The second filter medium may, e.g., also be disinfected during service intervals with e.g., alcohol- (e.g. ethanol or isopropanol) comprising solutions. Also, the second filter medium may be heated for disinfection or it may be disinfection by oxidative regeneration (e.g. in addition to heating). For example, the second filter medium may be detachable from the device described herein and may be autoclaved after removal.

In a further aspect, the present invention is directed to a use of the device as described herein for filtering ultrafine particles from a gas, optionally from a gas comprising polar liquids, optionally water, and optionally particles of more than about 1 µm or 500 nm diameter, e.g. organic particles such as pollen, bacteria, spores from bacteria and fungi) and inorganic (mineral) dust particles .

The polar liquids in the gas, as described herein, are present, e.g. in the form of droplets.

In an embodiment, the use described herein is one, wherein the ultrafine particles are selected from the group consisting of particles with a diameter of 10 to 500 nm, combustion soot particles, metal oxide particles, solid nuclei of any substance, metalloorganic particles, viruses, in particular those which are insoluble in the airway liquids.

In another aspect, the present invention is directed to a kit of parts comprising a device as described herein and optionally instructions for its use.

For example, the kit of parts may also comprise the first and second filter medium and/or the first and second filter housing, as well as, e.g. any other components described herein such as the gas moving device or heating means, separately but configured to be assembled.

In a further aspect, the present invention is directed to a method for filtering ultrafine particles from a gas, optionally a gas comprising polar liquids, optionally a gas comprising liquid water, the method comprising:
(a) providing a device or kit of parts as described herein; and
(b) passing the gas of interest through the device.

The filter device described herein is not only suitable for cleaning air in a given space, it is also suitable for cleaning the exhaled air of a human or animal, for example of a human or animal infected with a microorganism or virus. In the following, the filtering is described with reference to the filter device described herein. However, it is within the scope of this disclosure that any device suitable for filtering ultrafine particles, microorganisms and/or viruses can be used in the systems set forth below.

The filter device described herein may be used in a system which protects the environment from a person infected with a microorganism or virus, herein called "infected person". Protective shields such as masks or visors only prevent that particles emitted by an infected person, e.g. by sneezing or coughing or just normal exhalation, are directly transmitted from the infected person to another person close to the infected person. However, aerosols of, e.g. viral particles, remain suspended in air for long periods, e.g. 3 to 5 hours. The aforementioned shields cannot avoid the diffusion of the emitted particles in ambient air which results in contamination of large volumes of air and potential transmission of the particles, e.g. viruses, to other people. Air filter systems for ultrafine particles such as viruses, on the other hand, are generally limited by the (small) volume of air they can effectively clean.

Instead of filtering the complete volume of a given enclosure or space, e.g. a room, office, building etc., the air in the local environment around an infected person can be cleaned by a device described herein. For this purpose, a three-dimensional (3D) space around an infected person is defined, for which space the air is to be cleaned by a device described herein.

The 3D space can be defined by structural means such as walls, curtains or shields. Alternatively or additionally, the 3D space can be defined by directing an air flow.

In an embodiment, the present invention is directed to a system for isolating a person comprising a filter device as described herein, a device for moving gas as described herein and an air inlet in fluid communication with the filter device, wherein the air inlet, optionally the filter device and/or the device for moving gas, is positioned above or below a person and the system is configured to draw air from around the person in a substantially vertical direction into the air inlet to prevent exhaled air of the person from diffusing into and mixing with ambient air.

The air inlet, the filter device and the device for moving gas of the present system are all in fluid communication with each other, e.g. from the air inlet through the device for moving gas to the filter device. At least the air inlet is positioned above the person to be isolated while the filter device and the device for moving gas can be positioned at any suitable location as long as the air drawn in through the air inlet is passed, guided or forced through the filter device, e.g. via tubing or piping.

For example, the air surrounding an infected person can be, e.g. essentially vertically, sucked off into the filter device thus defining a 3D space around the infected person for which the air is filtered. The air flow, e.g. from the ground up to the air inlet of the filter device above the infected person, creates a 3D air-uplift zone (termed "uplift zone" zone in the following) around the infected person that avoids that the exhaled air of the infected person diffuses into and mixes with the ambient air outside of the uplift zone (see, e.g., Fig. 5). Preventing the exhaled air from mixing with the ambient air leads to the isolation of a person as described in the present embodiments.

The limited volume of the 3D space in the uplift zone created around the infected person can be filtered by a filter device that is much smaller and more economical compared to a filter device that would be needed to filter the complete ambient air of the infected person's environment, e.g. the room or building the infected person is in. Additionally, the definition of the 3D space around the infected person by the uplift zone allows the person to move freely as long as the uplift zone is maintained around the infected person.

The velocity of the air creating the uplift zone around the infected person should be sufficiently high to substantially reduce or avoid diffusion of exhaled air from the inside to the outside of the 3D space created by the uplift zone. For example, the velocity of the air creating the uplift zone can be 1- to 2-fold higher than the velocity of the exhaled air at a distance of about 15 to 30 cm of a person's face. For example, the air speed in the uplift zone can be in the range of about 0.1 to 0.2 m/s.

In an embodiment, the system described herein is one, wherein the device is configured to exhaust at least a part of the drawn and filtered air in direction of the person such that the exhausted air is recirculated into the device. For example, the filter device may have an air outlet that directs at least part of the filtered and exhausted air into the uplift zone such that at least part of this exhausted air is again drawn into the air intake of the system.

For example, an uplift zone can be created by positioning a suction hood as the air intake above a person, e.g. a person in a chair, wheelchair, a bed, a car, bus, train, ferry or aircraft seat, e.g. as a system for isolating a person described herein. The suction device may be any device for moving a gas as defined herein. To support the isolating effect of the uplift zone, structural barriers such as visors, shields or masks can be positioned in front of an infected person's head or mouth and nose to prevent that particles emitted at high velocities (e.g. by sneezing or coughing) penetrate the uplift zone. Optionally, a filter device, e.g. as described herein, can be used to clean the air within a protective suit or helmet by filtering the air within the suit or helmet.

Instead of creating an uplift zone by sucking air from above an infected person and into a filter device, a three-dimensional (3D) space around an infected person can also be created by sucking in air substantially below a person's head (creating a "drag zone"). For example, air can be sucked in through an opening in a table, e.g. a dining table, in a counter in front of a person, e.g. a cashier, or in an opening in the floor. The same principles, features and embodiments described herein for the uplift zone and the system for isolating a person also apply for the drag zone and both zones can be used in all embodiments and examples described herein. The main difference to the system with the inlet above a person is that the inlet is now below the person, optionally at least below the head, breast, waist, hip, knees, or feet and that the gas to be filtered moves substantially vertically down into the inlet.

Alternatively, an air shield or a curtain of airflow can be created in between two or more people or around a person. The air shield is meant to be encompassed in the term "curtain of airflow". The curtain of airflow may be created as described herein for the uplift or drag zone or by blowing air to create the curtain, and, e.g. which blown air is sucked in by a filter device as described herein.

In an embodiment the system of the invention is configured for isolating at least two people comprising a filter device of the invention, a device for moving gas and an air inlet in fluid communication with the filter device, wherein the air inlet forms part of a ceiling, a floor or of a piece of furniture, optionally a table, counter, bar, desk, hood, seating device, e.g. bench, chair, sofa, wherein the air inlet is positioned above or below the at least two people to create a substantially vertical air curtain between the at least two people, the system optionally further comprising an air outlet providing filtered air from the air inlet and positioned substantially opposite the air inlet.

For example, the curtain of airflow can be created by blowing air towards an air intake, which air intake may in turn create an uplift or drag zone and administer the air to a filter device. Optionally, a diameter of the air exit of the device blowing air for the curtain of airflow is selected to be about 50% of the diameter of the air inlet of the device sucking in the blown-out air. For example, the air speed of the curtain of airflow may be in the range of about 0.5 to 5, or about 1 m/s.

For effectively creating an uplift or drag zone or a curtain of airflow and filtering the airflow, the suction or blowing power should be adjusted to the size of the 3D space, the distance between air inlet and outlet and environmental impacts such as wind or other air streams. For example, an increased airflow is required, if the uplift or drag zone or the curtain of airflow should alone be capable of preventing particles of high velocity, e.g. emitted by sneezing or coughing, from penetrating the 3D space.

The air that is sucked into the filter device can either be exhausted into the environment or it can be exhausted such that it is sucked into the filter device again, creating a recirculation. The recirculation has the advantage that with every cycle of recirculation, the concentration of ultrafine particles is reduced, e.g. reducing the required size and capacity of the ultrafine particle filter.

Examples for uplift or drag zones and curtains of airflow and applications thereof are provided below with reference to exemplary Figs. 5 to 7.

### Examples

In the following, the invention will be described by examples with reference to the figures, none of which are to be interpreted as limiting the scope of the present invention.

**Fig. 1** shows an exemplary filter device (100) according to the present invention. The first filter housing (102) forms a cavity (101) into which the gas enters (arrows refer to gas flow). For all embodiments, the shape of the first filter housing (102) can be any shape that is suitable for forming a housing. It may be of a box or tube shape and it may be tapered as shown in Fig. 1 or feature substantially parallel sides.

In some embodiments, the cavity (101) may comprise means for directing the gas flow towards the first filter medium (103) in order to ensure that polar liquids and/or particles (between 500 and 1000 nm diameter) as described herein come into contact with the first filter medium (103) and are, e.g., absorbed thereon or therein.

For example, the first filter housing may comprise a gas inlet and a gas exit either opposite each other or at any other relative positions in the fist filter housing (102). The size of the gas inlet and outlet in Fig. 1 is non-limiting and may be adjusted by the skilled person, e.g. according to the desired air flow and/or size of the filter media.

The first filter housing (102) is partially covered with the first filter medium (103). The gas exits the first filter housing (102) via an opening (106) which may optionally also comprise a third filter medium as described herein which may, e.g. additionally straighten the gas flow and/or filter particles (e.g. between 500 and 1000 nm diameter) as described herein. The gas enters the second filter housing (104) which forms a cavity (107) and may, in some embodiments, be of any shape, e.g. a box or a cylinder. The second filter medium (105) partially forms the filter housing at the gas exit. In some embodiments, the second filter medium (105) can also completely form the filter housing.

**Fig. 2** illustrates an exemplary filter device (100) according to the present invention, wherein the first filter medium (103) forms the first filter housing and the gas exits the first filter housing via the first filter medium (103) in direction of the second filter housing (104). Substantially all the gas to be filtered passes through the first filter medium (103) when moving into the second filter housing (104). Again, the second filter medium (105) can, e.g., also completely form the second filter housing (104).

**Fig. 3** shows an embodiment of the filter device (100), wherein the first filter medium (103) either partially forms the first filter housing (102) or covers the first filter housing (102) on the side of the cavity (101). A gas moving device (108), e.g. a radial blower or any other gas moving device described herein, moves the gas and creates a rotational spin (circling arrows) within the first filter housing (102). For example, the shape of the gas moving device (108) may constitute flow-directing means which introduce and/or increase a rotational spin or turbulent flow of the gas within the first filter housing, for example also independent of the type of the gas moving device.

**Fig. 4** illustrates exemplary embodiments of the filter device (100), wherein the first filter housing (102) and the second filter housing (104) are arranged in series. Each of the first and second filter housings of Fig. 4a to 4c may be combined with each other. For example, and for all devices described herein, the first and second filter housings (102 and 104) may be detachably connected.

**Fig. 4a** illustrates a first filter housing (102), wherein the first filter housing (102) is partially covered with the first filter medium (103).

For example and for all embodiments, the first filter housing (103) can be gas-tight at the area of contact with the first filter medium (103) in order to move substantially all gas from the first filter housing (102) to the second filter housing (104).

The gas exits the first filter housing (102) via an opening (106) which may optionally also comprise a third filter medium as described herein which may, e.g., additionally straighten the gas flow.

As for all devices disclosed herein, a gas moving device may be positioned at the air inlet of the first filter housing (e.g. where the arrow shows entry of the gas into the device in Fig. 4a) or within the first filter housing (102).

For example, the first filter housing (102), i.e. the cavity (101) of all embodiments may be shaped or may comprise means for directing the gas flow towards the first filter medium (103) in order to ensure that polar liquids come into contact with the first filter medium (103) and are, e.g., absorbed thereon or therein.

The second filter housing (104) may comprise the second filter medium (105) at the site of gas exit, e.g. so that a cavity (107) is formed in between the fist filter housing gas exit and the second filter medium (105), wherein the volume of the cavity (107) and/or the surface area of the second filter medium may be adjusted depending on the required gas velocity/velocities.

**Fig. 4b** shows an alternative embodiment for the second filter housing (104), wherein the second filter medium (105) partially forms the second filter housing (104). The second filter housing (104) for any embodiment disclosed herein may also comprise the second filter medium (105) as a honeycomb structure. For example, the cavity (107) within the second filter housing (104) may be substantially completely filled with the second filter medium (105), for example in the form of a honeycomb cell filter with alternately closed cell openings (see, e.g. US 4,276,071 A). The gas may then exit the second filter housing (104) on the housing side opposite to the site of gas entry (see, e.g. Fig. 4a) or through the sides of the second filter housing (see, e.g. Fig. 4b).

**Fig. 4c** illustrates a first filter housing, wherein the first filter medium (103) at least partially covers the first filter housing (102) on the side of the cavity (101). The first filter housing (103) can be gas-tight at the area of contact with the first filter medium (103) in order to move substantially all gas from the first filter housing (102) to the second filter housing (104).

A gas moving device (108), e.g. a radial blower, moves the gas and creates a rotational spin (circling arrows) within the first filter housing (102). For example, the shape of the gas moving device (108) may constitute flow-directing means which introduce and/or increase a rotational spin or turbulent flow of the gas within the first filter housing, for example also independent of the type of the gas moving device.

**Fig. 5** illustrates the 3D uplift zone (116) around a person (117), optionally an infected person, optionally infected by a virus, which is formed by air flow (114) created by sucking air into a filter device (100) above the person.

In any embodiment and for all aspects, the filter device (100) may be movably positioned above the person (117) and it may follow the movements of the person. For example, a track system or any other mounting system that allows for movable positioning of the filter device (100) can be used above peoples' heads so that the filter device follows the peoples' movements. For example, in cues or workspaces where peoples' movements can be predetermined the filter device(s) follow the movement of the people. Movement or gathering of people where air cleaning is required can be determined, e.g. by monitoring CO₂ emissions in a space of interest and moving the filter devices to the areas of increased CO₂ emissions.

The exhausted and filtered air from the filter device (100) can either be exhausted away from the person (arrow 118) or it can be exhausted around the person creating a curtain of airflow (arrow 119) around the person, wherein the exhausted air is at least partially re-administered to the uplift zone and is recycled in the filter device . The percentage in the volume of air of the curtain of airflow that is re-administered to the uplift zone compared to the volume of air that is not re-administered can be in the range of, e.g. 10 to 40%. Exemplary air speeds for all embodiments, and only with reference to Fig. 5 for easier understanding, can be 0.1 to 0.2 m/s within the uplift zone (116) and/or 0.5 to 5 m/s for the exhausted air (arrow 119) to create the curtain of airflow mentioned above.

In all embodiments, if the filtered air is re-administered, it can be advantageous to include a CO₂ sensor to determine if and what amount of fresh air must be supplied.

**Fig. 6** illustrates a system (120) for creating a 3D space (115) around a person (113) and for filtering the air in that space by a filter device (100). A hood-shaped enclosure (109) can be placed over a person's head to support the isolating effect of the suction-created uplift zone around the person's head. Connecting means (111), e.g. a tube or hose, can be installed between the hood-shaped enclosure (109) and the filter device (100) to allow positioning of the filter device (100) at a convenient location, e.g. attached to a chair, wheelchair or bed.

To further support the isolating effect of the uplift zone, a structural barrier (110), e.g. a transparent visor, is positioned in front of the person's mouth and nose to prevent that particles emitted at high velocities (e.g. by sneezing or coughing) penetrate the uplift zone. Alternatively or additionally, a face mask can be used for the same purpose.

Depicted in Fig. 6 is a wheelchair (112) but any other seating or laying device is encompassed by this disclosure. The exhausted and filtered air from filter device (100) can be exhausted away from the person (113), it can be re-administered to 3D space (115), or it can be exhausted around the person creating a curtain of airflow around the person and towards the hood-shaped enclosure, resulting in the effects described above.

Exemplary air speeds for all embodiments, and only with reference to Fig. 6 for easier understanding, can be 0.1 to 0.2 m/s within the hood-shaped enclosure (109) and/or 0.5 to 5 m/s for the exhausted air to create the curtain of airflow mentioned above.

**Fig. 7** illustrates a further embodiment of the present disclosure for creating a curtain of airflow and optionally concomitantly filtering ultrafine particles from the said airflow. For example, a curtain of airflow (114) can be created between two people (117), e.g. between an infected and non-infected person, which are positioned opposite each other at a table, desk or counter (121). The table, desk or counter (121) comprises an aperture (122), and an outlet (124) which is in fluid and air-tight communication with a second outlet (123) positioned above the table, desk or counter (121). Air is sucked into the aperture (122) and is optionally filtered by a filter device positioned in the table, desk or counter (121), in the second outlet (123) or anywhere in between these structures. The optionally filtered air is then at least partly released through second outlet (123) creating a curtain of airflow that separates the people (117) and avoids exchange of potentially contaminated exhaled air between the people (117). Additionally, part of the filtered air may also be released towards the people (117) standing at the table, desk or counter (121), which creates an additional airflow that further avoids mixing of exhaled air of the two people (117).

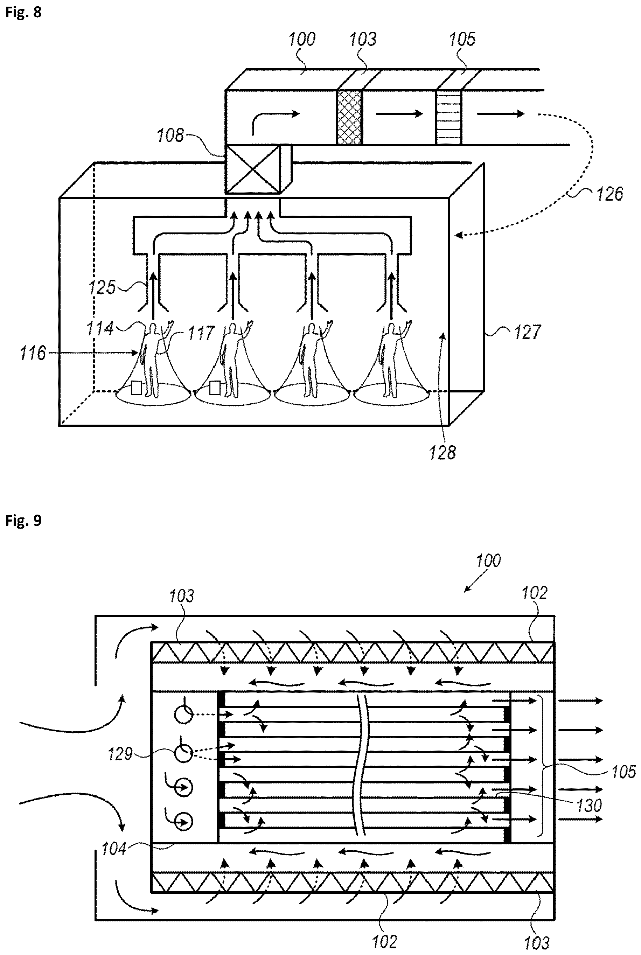

**Fig. 8** illustrates a system for avoiding infections among people (117) in a given space (128), e.g. a working or production building (127), and for filtering air drawn from the building (127). Air is drawn up from above a person (117) creating an uplift zone (116) by the airflow around the person (114). The air is drawn up, for example, at speeds of about 0.1 to 0.2 m/s when measured above a person's head. A gas moving device (108), e.g. a ventilator, moves the air (arrows) into a filter device (100) as described herein. In the filter device (100), here, for example a tubular or rectangular elongated device of an essentially constant cross section or diameter, the air is first passed through the first filter medium (103) acting as an impaction filter, e.g. at velocities between about 0.5 and 5 m/s in order to filter and retain polar liquids and optionally particles of more than about 1 µm or 500 nm on or within the material of the first filter medium (103) after the collision of polar liquids and optionally particles with the first filter medium (103). Subsequently, the air moves towards and through the second filter medium (105) acting as a diffusion filter at an air velocity of about 0.01 to 0.1 m/s, i.e. a reduced velocity in order to filter ultrafine particles such as viruses in the second filter medium (105). The second filter medium's shape and/or composition, e.g. tubes with alternating outlets (honeycomb) as described herein or any other known ultrafine particle filter, results in the reduction of the air velocity (based, e.g. on the large surface area of the tubes of the filter medium) while the air mass flow remains essentially constant through the filter device (100). The filtered air may then be re-administered to the internal space (108), see arrow (126).

**Fig. 9** illustrates an alternative filter device (100) according to the present invention. The second filter medium (105) is positioned in the center of the device (100). The second filter medium (105) may form the second filter housing (104) or an additional housing may be used. The first filter housing (102) is defined by the circumference of the second filter medium or housing (105, 104) and an outer hull. A gas enters the first filter housing (102) (see arrows) and passes through the first filter medium (103) before entering the second filter (105) or housing (104), e.g. through apertures (129) in the housing. The second filter medium (105) may be of a cell filter-type in which the gas is forced to cross the filter walls from one to another channel (130) before exiting the filter and filter device (100). The filter device illustrated in Fig. 9 may be of a tubular shape, e.g. in which the first filter medium (103) has a ring form and is circumferentially positioned around the second filter medium (105), wherein the gas flows through the first filter medium (103) in a substantially radial direction, and through the second filter medium (105) in a substantially axial direction, which allows for a very compact shape of the filter device (e.g. for use in airplanes, buses, cars or trains). Alternatively, the filter device (100) may be of a planar form comprising two or more discrete first filter elements (103).

## Claims

1. A filter device (100) for filtering ultrafine particles from a gas, optionally a gas comprising polar liquids, comprising:
(i) a first filter medium (103) for absorbing polar liquids, optionally water, and optionally particles of more than about 1 µm or 500 nm diameter; in fluid communication with
(ii) a second filter medium (105) for absorbing ultrafine particles; and
(iii) a gas outlet;
wherein
(a) the first filter medium (103) is configured to allow vaporization of the absorbed polar liquids;
(b) the device (100) is configured to guide the gas from the first to the second filter medium and through the second filter medium (105); and
(c) the second filter medium (105) forms the gas outlet.

2. The filter device (100) according to claim 1, wherein the first and/or second filter medium form at least part of a first and/or second filter housing (102, 104).

3. The filter device (100) according to claim 2, wherein the first filter housing (102) is configured to allow and/or create a rotational spin or turbulent flow of the gas for contacting the first filter medium (103).

4. The filter device (100) according to claim 3, wherein the first filter housing (102) comprises (i) a gas outlet (106) configured to straighten the gas flow, and/or (ii) a third filter medium.

5. The filter device (100) according to any of claims 2 to 4, wherein the first and the second filter housings (102, 104) are arranged in sequence, or wherein the first filter housing (102) is positioned within the second filter housing (104).

6. The filter device (100) according to any of claims 1 to 5, further comprising a device for moving gas (108), optionally a radial blower or a fan, configured to move the gas through the device.

7. The filter device (100) according to any of claims 1 to 6, wherein (i) the first filter medium (103) has a medium pore size of more than about 30 µm, optionally in the range of 30 to 200 µm, and/or (ii) the second filter medium (105) has a medium pore size in the range of 5 to 20 µm.

8. The filter device (100) according to any of claims 1 to 7, wherein (i) the gas flow through the first filter medium (103) is in the range of 0.5 to 5 m/s, optionally 0.5 to 2 or 0.5 to 1 m/s and/or (ii) the gas flow through the second filter medium (105) is in the range of 1 to 20 cm/s, optionally 1 to 10, optionally 1 to 3 cm/s.

9. The filter device (100) according to any of claims 1 to 8, wherein at least the surface of the first and/or second filter medium (103, 105) is antimicrobial, antifungal and/or antiviral, optionally is silver or silver-coated.

10. A system for isolating a person (117) comprising a filter device (100) according to any of claims 1 to 9, a device for moving gas (108) and an air inlet (122) in fluid communication with the filter device (100), wherein the air inlet (122), optionally the filter device (100) and/or the device for moving gas (108), is positioned above or below a person (117) and the system is configured to draw air from around the person (117) in a substantially vertical direction into the air inlet (122) to prevent exhaled air of the person (117) from diffusing into and mixing with ambient air.

11. The system according to claim 10, wherein the device (100) is configured to exhaust at least a part of the drawn and filtered air in direction of the person (117) such that the exhausted air is recirculated into the device (100).

12. A system for isolating at least two people (117) comprising a filter device (100) according to any of claims 1 to 9, a device for moving gas (108) and an air inlet (122) in fluid communication with the filter device (100), wherein the air inlet (122) forms part of a ceiling, a floor or of a piece of furniture (121), wherein the air inlet (122) is positioned above or below the at least two people (117) to create a substantially vertical air curtain (114) between the at least two people (117), the system optionally further comprising an air outlet (123) providing filtered air from the air inlet (122) and positioned substantially opposite the air inlet (122).

13. A use of the device (100) according to any of claims 1 to 9 or the system according to any of claims 10 to 12 for filtering ultrafine particles, optionally selected from the group consisting of particles with a diameter of 10 to 500 nm, combustion soot particles, metal oxide particles, metalloorganic particles, and viruses, from a gas, optionally from a gas comprising polar liquids, optionally water, and optionally particles of more than about 1 µm or 500 nm diameter, optionally organic particles selected from pollen, bacteria, spores from bacteria and fungi, or inorganic dust particles .

14. A kit of parts comprising a device (100) according to any of claims 1 to 9 and optionally instructions for its use.

15. A method for filtering ultrafine particles from a gas, optionally a gas comprising polar liquids, optionally a gas comprising liquid water, the method comprising:
(a) providing a device (100) or kit of parts according to any of claims 1 to 9 or 14; and
(b) passing the gas of interest through the device (100).
